# EUROPÄISCHE PATENTSCHRIFT

(11) **EP 2 776 898 B1**
(45) Veröffentlichungstag und Bekanntmachung des Hinweises auf die Patenterteilung: **03.02.2016**
(21) Anmeldenummer: 12797745.2
(22) Anmeldetag: 09.11.2012
(51) Int. Cl.: G06F 1/16, F16M 13/00

(54) **AUFBEWAHRUNGS- UND LADESTATION FÜR ELEKTRONIKGERÄTE**
STORAGE AND CHARGING STATION FOR ELECTRONIC APPLIANCES
STATION DE RANGEMENT ET DE RECHARGE D'APPAREILS ÉLECTRONIQUES

(30) Priorität: 11.11.2011 DE 202011107782 U
(43) Veröffentlichungstag der Anmeldung: 17.09.2014
(73) Patentinhaber: Kuchler, Marcus, 81675 München (DE)
(72) Erfinder: Kuchler, Marcus, 81675 München (DE)
(74) Vertreter: Strehl Schübel-Hopf & Partner
(86) Internationale Anmeldenummer: PCT/EP2012/072337
(87) Internationale Veröffentlichungsnummer: WO 2013/068573

(56) Entgegenhaltungen:
- EP-A2- 2 060 962
- US-A- 5 978 569
- "Die Maxima Family Ladestation", Mobile Fun, 23. Juni 2011 (2011-06-23), XP055052930, Gefunden im Internet: URL:http://web.archive.org/web/20110623041 858/http://www.mobilefun.de/29311-die-maxi ma-family-ladestation.htm [gefunden am 2013-02-11]

## Beschreibung

### Technisches Gebiet

Die Erfindung betrifft eine einfache mechanische Halterung, die als praktische und leicht adaptierbare Aufbewahrungs- und Ladestation für Elektronikgeräte dient.

### Stand der Technik

Die Akkumulatoren von batteriebetriebenen elektronischen Geräten müssen regelmäßig aufgeladen werden. Üblicherweise erfolgt dies über ein Ladekabel, das den allgemein verfügbaren Netzstrom auf den für das Laden des Akkumulators erforderlichen Gleichstrom transformiert. Ferner verfügen viele elektronische Geräte, insbesondere mobile Endgeräte wie Handys, Smartphones oder PDAs (Personal Digital Assistants), eine Schnittstelle zum kabelgebundenen Datenaustausch mit einem Computer. In beiden Fällen ist das Bereithalten und Einstecken eines Kabels in das elektronische Gerät erforderlich, das im Falle eines Ladekabels mit dem Netzstrom und im Falle eines Datenübertragungskabels mit dem Computer zu verbinden ist.

Die zunehmende Popularität batteriebetriebener Elektronikgeräte, insbesondere Smartphones, bringt es mit sich, dass derartige Geräte häufig aufgeladen oder zum Synchronisieren der darauf gespeicherten Daten an einen Computer angeschlossen werden müssen. Außerdem kommt es nicht selten vor, dass in einem Haushalt mehrere solche Geräte verwendet werden. Das führt mitunter dazu, dass Lade- oder Datenaustauschkabel erst nach einigem Suchen dem richtigen Gerät zugeordnet werden können, beziehungsweise nicht ohne weiteres auffindbar sind.

Viele Geräte der Firma Apple, die sich derzeit weltweit wegen ihrer einfachen Bedienung durchsetzen, lassen sich über einen einzigen Geräteanschluss aufladen und zur Datenübertragung anstecken. Bei den iPhone5-Geräten erfolgt dies über den 9-poligen sogenannten "Lightning"-Anschluss; bei iPhone-Geräten früherer Generationen über den 30-poligen "Dock"-Anschluss. Durch diesen einheitlichen Anschluss lassen sich mittels eines einzigen Kabels mit dem entsprechenden Stecker alle passenden Elektronikgeräte laden und synchronisieren. Am anderen Ende des Ladekabels befindet sich bei den Apple-Systemen üblicherweise ein USB-Stecker.

Ähnliche Steckersysteme werden von Herstellern anderer Smartphones wie Samsung oder Microsoft eingesetzt. Die vorliegende Erfindung ist als Halterung für Elektronikgeräte verschiedener Arten unabhängig von deren Herstellerfirma anwendbar.

In "Die Maxima Family Ladestation", Mobile Fun, 23. Juni 2011, XP055052930 ist eine Halterung gemäß dem Oberbegriff des vorliegenden Anspruchs 1 gezeigt. Weitere bekannte Ladestationen sind in EP 2 060 962 A2 und US 5 978 569 A beschrieben.

### Beschreibung der Erfindung

Aufgabe der Erfindung ist es, eine preisgünstige, stabile und praktische Aufbewahrungs- und Ladestation für batteriebetriebene Elektronikgeräte, insbesondere Mobilfunkgeräte wie Smartphones zu schaffen. Die Aufbewahrungs- und Ladestation soll insbesondere das lästige Suchen des geeigneten Lade- oder Datenübertragungskabels erübrigen und einen sicheren und variabel verwendbaren Aufbewahrungsort für das Elektronikgerät darstellen. Gewünscht wird insbesondere eine Lösung, bei der sich mehrere in einem Haushalt verwendete Elektronikgeräte gleichzeitig aufbewahren lassen.

Diese Aufgabe wird wenigstens teilweise durch die im Anspruch 1 definierte Halterung gelöst. Die erfindungsgemäße Halterung weist einen in ihrer Längsrichtung verlaufenden ersten Kanal auf, entlang dem der elektrische Verbindungsstecker zu dem Elektrogerät in der Längsrichtung verschiebbar und quer zu der Längsrichtung über einen bestimmten Winkelbereich drehbar bzw. schwenkbar ist. Durch die lineare Verschiebbarkeit des Steckers lässt sich dessen gewünschte Positionierung vor oder nach dem Einstecken des Elektrogeräts bequem einstellen. Die Schwenkbarkeit des Verbindungssteckers erleichtert wiederum das Einstecken in den zugehörigen Geräteanschluss und die Adaption auf die unterschiedlichen Dimensionen der anzuschließenden Geräte. Ferner erlaubt sie eine optimale Ausrichtung des Gerätebildschirms auf das Blickfeld des Betrachters während das Gerät auf der erfindungsgemäßen Halterung abgestellt wird.

Der erste Kanal hat eine zylindrische Grundform und der Geräteverbindungsstecker ein dazu passendes zylindrisches Sockelelement, dessen Außendurchmesser so an den Innendurchmesser des ersten Kanals angepasst ist, dass der Verbindungsstecker um die in der Längsrichtung verlaufende Mittelachse des Zylinders schwenkbar ist. Damit lassen sich sowohl Translationsverschiebungen in der Längsrichtung als auch Rotationseinstellungen in der Schwenkrichtung senkrecht dazu einfach und zuverlässig durchführen. Der Gerätestecker kann so abhängig von der Größe des anzusteckenden Elektronikgeräts und der genauen Position von dessen Steckeranschluss optimal positioniert werden.

Der erste Kanal hat weiter vorzugsweise an der Zylindermantelfläche einen ersten Schlitz, durch den das elektrische Verbindungselement des Gerätesteckers nach außen ragt, und einen zweiten Schlitz, durch den das Steckerkabel in einen zweiten Kanal im Inneren des Hohlprofils geführt wird. Die zwei Schlitze können sich über die gesamte Länge des Hohlprofils erstrecken, oder aber auch nur über einen bestimmten Teilabschnitt davon. Wichtig ist lediglich, dass sie lang genug sind um eine ausreichende Translationsverschiebung des Gerätesteckers in der Längsrichtung und damit eine Adaption der erfindungsgemäßen Halterung an verschiedene Größen der daran anzuschließenden Elektronikgeräte zu gewährleisten.

Außer den beiden Schlitzen weist die Wandung des ersten Kanals vorzugsweise zwei weitere Abschnitte auf, die im Querschnitt zu der Längsrichtung in einem im Wesentlichen C-förmigen Abschnitt und einem dazu entgegengesetzten Halteabschnitt bestehen. Der C-förmige Abschnitt führt das zylindrische Sockelelement des Gerätesteckers entlang seiner Zylinder-Mantelfläche. Der Halteabschnitt stabilisiert das Sockelelement von der gegenüberliegenden Seite und ermöglicht so im Zusammenspiel mit dem C-förmigen Abschnitt eine zuverlässige Führung des Verbindungssteckers sowohl in der Längsrichtung als auch in der dazu senkrechten Schwenkrichtung.

An der Mantelfläche des vorzugsweise innen hohl ausgebildeten zylindrischen Sockelelements ist gemäß einem besonders bevorzugten Ausführungsbeispiel ein ebenfalls innen hohl ausgebildeter Vorsprung von rechteckiger Grundform angeformt. Dieser ragt in den zweiten Kanal hinein und definiert den Winkelbereich, über den das Sockelelement um seine Zylinderachse schwenkbar ist. In der ersten Extremposition stößt der Vorsprung mit seiner Oberseite gegen den Halteabschnitt des ersten Kanals. In der entgegengesetzten Extremposition stößt er mit seiner Unterseite gegen den C-förmigen Abschnitt des ersten Kanals. Der Winkelbereich lässt sich alternativ auch durch das elektronische Anschlusselement vorgeben, das ja auch ab einem bestimmten Schwenkwinkel gegen den Halteabschnitt bzw. gegen das andere Ende des C-förmigen Abschnitts anstößt. Diese Ausführungsform ist jedoch weniger bevorzugt, da sie das sensible elektronische Anschlusselement mechanisch beansprucht; selbst dann, wenn das Anschlusselement von einer zusätzlichen Schutzschicht umgeben wird und nur mittelbar über diese Schutzschicht an den Kanten des ersten Schlitzes anstößt.

Das Hohlprofil weist als zusätzliches wichtiges Element gemäß einem bevorzugten Ausführungsbeispiel ferner eine schräg nach oben ragende Stützrippe auf, gegen die das Elektronikgerät während seiner Aufbewahrung in der erfindungsgemäßen Halterung nach schräg hinten angelehnt werden kann. Die Stützrippe erstreckt sich parallel zu dem ersten Schlitz in der Längsrichtung und ist gegenüber diesem ein Stück weiter nach hinten versetzt, so dass das Elektronikgerät bei Anschluss an den Gerätestecker auf die zwei vor bzw. hinter dem ersten Schlitz in Längsrichtung verlaufenden streifenförmigen Abschnitte aufgestellt und gegen die Stützrippe angelehnt werden kann. Dadurch wird erreicht, dass das Elektronikgerät bei Anschluss an den Gerätestecker stabil auf der Halterung gelagert werden kann, ohne dass der sensible Bereich der elektrischen Verbindung mit dem Gerätestecker unter mechanischer Spannung ist. Ferner erlaubt das Aufstellen des Elektronikgeräts in seiner aufrechten Position einen guten Einblick auf dessen Bildschirm.

Gemäß einem besonders praktischen Aufbau des Hohlprofils setzt sich dieses aus einer Grundstruktur mit zwei spitzwinklig aufeinander zu laufenden Seitenwänden zusammen, die durch eine Versteifungsrippe zusätzlich miteinander verbunden sind. Der durch die beiden Seitenwände eingeschlossene spitze Winkel beträgt ca. 3° bis 25°, vorzugsweise ca. 5° bis 15°, besonders bevorzugt ca. 10°. Die Grundstruktur weist im senkrecht zu der Längsrichtung verlaufenden Querschnitt die Form eines spitzwinkligen Dreiecks auf, das allerdings durch den ersten Schlitz an der oberen der beiden langen Seitenwände unterbrochen ist. Etwas zurückgesetzt hinter dem ersten Schlitz erstreckt sich von der oberen Seitenwand die bereits erwähnte Stützrippe nach schräg oben.

Außer durch die Versteifungsrippe werden die obere und die untere Seitenwand noch durch die dritte, dem spitzen Winkel entgegengesetzte, kurze Seitenwand des spitzwinkligen Dreiecks und den C-förmigen Abschnitt miteinander verbunden. Dies verleiht dem erfindungsgemäßem Hohlprofil nicht nur die erforderliche Stabilität, sondern schafft neben dem ersten Kanal und dem zweiten Kanal, der zwischen dem C-förmigen Abschnitt und der Versteifungsrippe verläuft, außerdem noch einen dritten Kanal zwischen der kurzen Seitenwand der dreieckförmigen Grundstruktur und dem C-förmigen Abschnitt, sowie einen vierten Kanal, der durch die spitzwinklig miteinander verbundenen anderen zwei Seitenwände der Grundstruktur und die Versteifungsrippe gebildet wird. In diesen dritten und vierten Kanal lassen sich jeweils Steckverbinder einführen, die ein Stück weit in Längsrichtung aus den Kanälen herausragen und so in entsprechende Kanäle eines ähnlich geformten zweiten Hohlprofils eingeschoben werden könne. Auf diese Weise lässt sich das erfindungsgemäße Hohlprofil durch Anschluss eines oder mehrerer weiterer Hohlprofile in Modulbauweise verlängern und damit an die Anzahl und Größe der aufzubewahrenden Elektronikgeräte anpassen.

Besonders bevorzugt ist die Herstellung des Hohlprofils aus einem Stück in einem Extrusions- oder Spritzgussverfahren. Bevorzugte Materialien sind Kunststoffe, Aluminium oder andere Leichtmetalle. Weil das Hohlprofil vorzugsweise an den beiden Stirnendseiten offen ist, lässt es sich am Ende des Herstellverfahrens durch Sägen oder Schneiden leicht auf die gewünschte Länge kürzen. Die Hohlprofile lassen sich also problemlos in geeigneter Länge fertigen und mit geeignet vielen Verbindungssteckern verpacken und ausliefern. Außerdem kann der Kunde das Hohlprofil auch leicht selbst kürzen und so auf seine individuellen Bedürfnisse anpassen.

### Kurze Beschreibung der Zeichnungen

Ein bevorzugtes Ausführungsbeispiel wird nun anhand der Zeichnung näher erläutert. Es zeigt:
Figur 1 eine perspektivische Ansicht der erfindungsgemäßen Halterung in Gebrauch;
Figur 2 einen Querschnitt der erfindungsgemäßen Halterung mit einem Verbindungsstecker in verschiedenen Schwenkwinkelpositionen; und
Figur 3 mehrere erfindungsgemäße Halterungen verschiedener Längen, die teilweise durch Steckverbinder verbunden sind.

### Detaillierte Beschreibung eines Ausführungsbeispiels

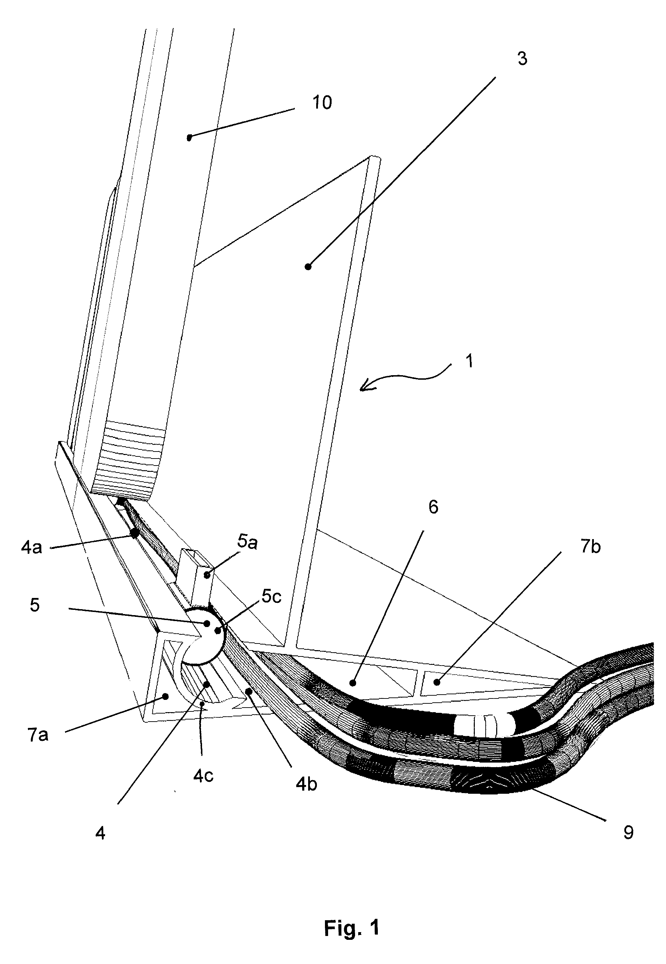

Figur 1 zeigt die erfindungsgemäße Halterung in einer perspektivischen Überblicksansicht. Zu sehen ist ein an der Stirnseite offenes Hohlprofil 1, das auch als Längsprofil bezeichnet werden kann. Ein oder mehrere Elektronikgeräte 10 werden mit ihrer Stirnseite, an der sich üblicherweise die Anschlussbuchse für das Lade- oder Datenkommunikationskabel 9 befindet, auf die in Längsrichtung verlaufenden Streifenabschnitte vor und hinter einem ersten, in der Längsrichtung der Halterung verlaufenden Schlitz 4a aufgesetzt und nach hinten gegen eine schräg nach oben verlaufende Stützrippe 3 angelehnt. Eingesteckt in das Elektronikgerät ist in der Figur 1 ein Verbindungsstecker 5, von dem aus das zugehörige Elektrokabel 9 durch einen zweiten Schlitz 4b und einen zweiten Kanal 6, der als Kabelkanal dient, nach außen zum Anschluss an das Stromnetz oder einen Computer geführt wird.

Zu sehen ist im Vordergrund der Figur 1 insbesondere ein Verbindungsstecker 5 ohne daran angeschlossenes Elektronikgerät. Anhand dieses Verbindungssteckers 5 lässt sich die Verschiebbarkeit des Verbindungssteckers 5 innerhalb des Hohlprofils 1 besonders gut erkennen. Der zylindrische erste Kanal 4 gibt dem entsprechend zylindrisch geformten Sockelelement 5c des Steckers 5 eine lineare Führung in der Längsrichtung. So lässt sich das Sockelelement 5c translatorisch entlang dem ersten Kanal 4 verschieben und in eine gewünschte Position zum Anschluss eines Elektronikgeräts 10 bringen. Während des Verschiebens ragt das elektronische Anschlusselement 5a durch den in Längsrichtung verlaufenden ersten Schlitz 4a nach oben aus dem Hohlprofil 1 heraus.

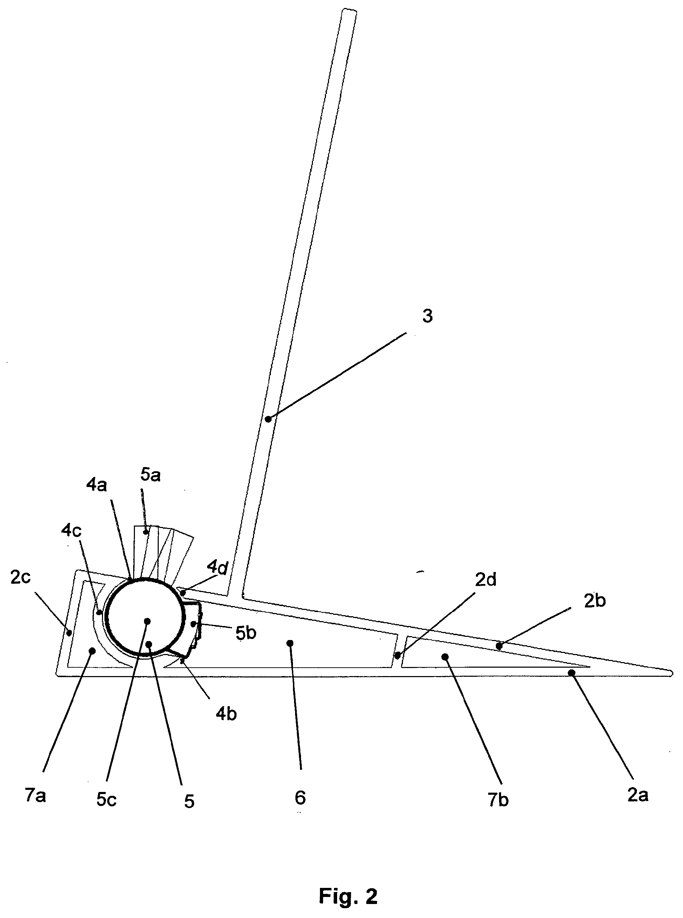

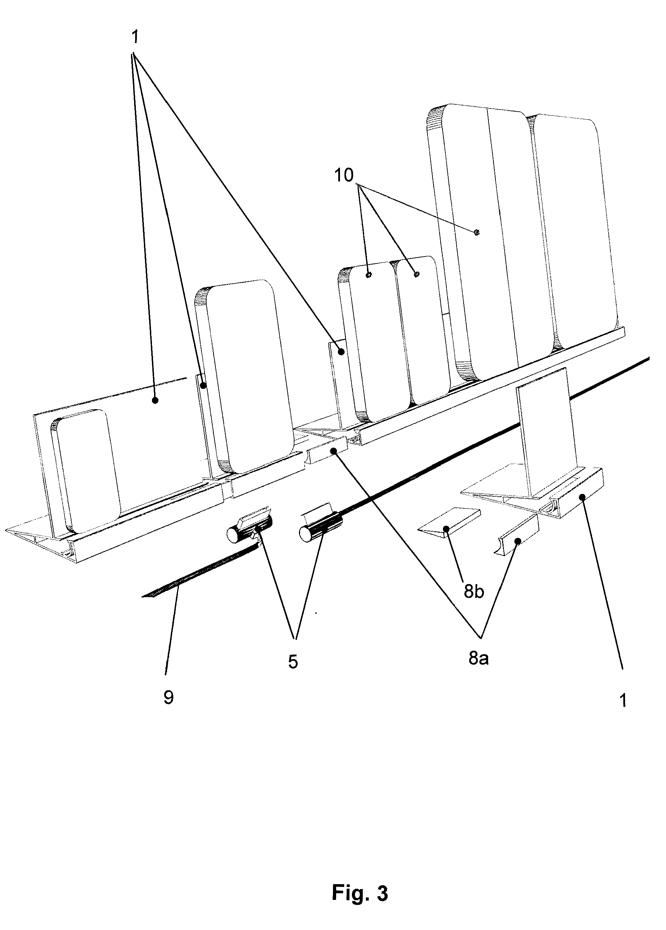

Gleichzeitig erlaubt die Aufnahme des Sockelelements 5c in dem zylindrischen ersten Kanal 4 aber auch ein Verschwenken des Verbindungssteckers 5 in einer zu der Längsrichtung senkrechten Schwenkrichtung über einen vorgegebenen Winkelbereich. Dies wird später anhand der Figur 2 näher erläutert. Die Funktion des außerdem in der Figur 1 zu sehenden dritten Kanals 7a und des vierten Kanals 7b wird später anhand der Figur 3 erläutert.

Die Querschnittsansicht der Figur 2 zeigt das Hohlprofil 1 mit einem darin angeordneten Stecker 5 in drei verschiedenen Schwenkpositionen. Die mittlere Schwenkposition ist die für das Einstecken der Elektronikgeräte 10 bevorzugte Position, weil sie vor und hinter dem elektronischen Anschlusselement 5a ausreichend Platz zum Einführen des Anschlusselements 5a in die Anschlussbuchse des Elektronikgeräts 10 lässt. Die übrigen zwei Schwenkpositionen zeigen die Schwenkwinkelstellungen, in denen ein weiteres Verschwenken blockiert wird, weil dann ein sich durch den zweiten Schlitz 4b in den zweiten Kanal 6 erstreckender Vorsprung 5b gegen den Halteabschnitt 4d, bzw. gegen das C-förmige Profil 4c anstößt und somit einen mechanischen Widerstand erzeugt. Der Vorsprung 5b dient also als rotationsbegrenzender Anschlag.

Gut in der Figur 2 zu sehen ist der im Wesentlichen dreieckförmige Aufbau der Grundstruktur des Hohlprofils 1 durch die drei Seitenwände 2a, 2b, 2c. Die dreieckförmige Grundstruktur kann auch als Abstützungsarm bezeichnet werden. Die zwei langen Seitenwände 2a, 2b laufen in einem spitzen Winkel von ca. 10° aufeinander zu und sind durch eine Versteifungsrippe 2d verbunden. Die untere Seitenwand 2a wird in Gebrauch auf den Boden aufgelegt und ist daher in der Figur 2 horizontal dargestellt. Die obere der zwei langen Seitenwände 2b ist in ihrem vorderen Bereich in der Nähe der dritten Seitenwand 2c durch den ersten Schlitz 4a unterbrochen, durch den das elektrische Anschlusselement 5a des Verbindungssteckers 5 verläuft.

Vor dem ersten Schlitz 4a verbindet das C-förmige Profil 4c die obere Seitenwand 2b mit der unteren Seitenwand 2a und schafft so den dritten Kanal 7a zwischen dem C-förmigen Abschnitt 4c und der dritten Seitenwand 2c. Hinter dem ersten Schlitz 4a setzt sich die obere Seitenwand 2b mit dem kreissegmentförmig abgeschrägten Halteabschnitt 4d nach hinten fort. Weiter hinten erstreckt sich die Stützrippe 3 rechtwinklig von der oberen Seitenwand 2b nach oben. Die zwei streifenförmigen Abschnitte, die durch den ersten Schlitz 4a getrennt sind und sich im vorderen Bereich der oberen Seitenwand 2a von dessen Vorderende an der kurzen Seitenwand 2c bis zu der Stützrippe 3 erstrecken, bilden die Auflageflächen für die Stirnseite des Elektronikgeräts 10, das an das elektronische Anschlusselement 5a anzuschließen ist.

Unterhalb des Halteabschnitts 4d ist die Wand des zylindrischen ersten Kanals 4 erneut unterbrochen, und zwar durch den zweiten Schlitz 4b, in den der Vorsprung 5b hineinragt. Wie bereits beschrieben, bilden der Halteabschnitt 4d und das entgegengesetzte Ende des C-förmigen Abschnitts 4c einen oberen und einen unteren Anschlag, die jeweils den maximalen Schwenkwinkel des Verbindungssteckers 5 nach vorne bzw. nach hinten definieren. Der zweite Schlitz 4b verbindet den ersten Kanal 4 mit dem zweiten Kanal 6 und erlaubt so das Durchleiten der Kabelverbindung von dem Anschluss 5a in den zweiten Kanal 6, von wo das Kabel 9 durch eine offene Stirnfläche des zweiten Kanals 6 nach außen geführt wird.

Ferner ist in der Figur 2 noch der durch die Versteifungsrippe 2d und die obere und untere Seitenfläche 2b, 2a eingegrenzte vierte Kanal 7b zu sehen. Die Funktion dieses vierten Kanals 7b sowie die des dritten Kanals 7a soll nun anhand der Figur 3 näher erläutert werden.

Figur 3 zeigt mehrere der erfindungsgemäßen Hohlprofile 1 mit mehreren darauf abgelegten Elektronikgeräten 10, hier iPhones bzw. iPads der Firma Apple. Wie zu sehen ist, lassen sich die mehreren Geräte 10 trotz ihrer unterschiedlichen Größen aufgrund der Verschiebbarkeit der Stecker 5 in der Längsrichtung bequem nebeneinander positionieren. Die gegenüber der Vertikalen leicht geneigte Position der Gerätedisplays erlaubt einen guten Sichtwinkel auf die Displays, so dass der Lade- oder Synchronisationsvorgang vom Nutzer gut verfolgt werden kann.

Die erfindungsgemäße Halterung lässt sich aus diesem Grund aber auch gut als Auflage für das Gerät verwenden, während auf diesem ein Videofilm oder dergleichen abgespielt wird. Außerdem lässt sich die erfindungsgemäße Halterung auch gut zur Präsentation mehrerer Geräte in einem Verkaufsstand verwenden, weil die Geräte optisch ansprechend nebeneinander positionierbar sind und ihre Displays alle in die gleiche Richtung weisen, in der sie für den Kunden gut einsehbar sind.

Ferner dargestellt sind zwei Stecker 5, die in das erfindungsgemäße zylinderförmige Sockelelement 5c mit angeformten Vorsprung 5b eingepasst sind, sowie das zugehörige Ladekabel 9. In der Figur ist der 30-polige Dock-Anschluss als Beispiel für das elektronische Anschlusselement 5a gezeigt. Es kann aber je nach Art und Generation der anzuschließenden Elektronikgeräte 10 jede beliebige andere Steckerart verwendet werden.

Die im Vordergrund der Figur 3 zu sehenden zwei kürzeren Hohlprofile 1 sind durch Steckverbinder 8a, 8b in Längsrichtung miteinander verbunden. Das längere Hohlprofil 1 ist in Längsrichtung so dahinter positioniert, dass es sich mit dem mittleren Hohlprofil durch entsprechende Steckverbinder 8a, 8b verbinden lässt. Im bevorzugten Ausführungsbeispiel sind die Steckverbinder 8a, 8b aus elastischem Kunststoff hergestellt.

Wie in der Figur 3 weiter rechts dargestellt, ist ein erster Steckverbinder 8a so geformt, dass er sich in Längsrichtung ein Stück weit in den dritten Kanal 7a einschieben lässt. Der keilförmige zweite Steckverbinder 8b ist wiederum so geformt, dass er sich in den vierten Kanal 7b einschieben lässt. Fügt man nun das herausstehende Ende des ersten bzw. zweiten Steckverbinders 8a, 8b in den entsprechenden dritten bzw. vierten Kanal 7a, 7b eines zweiten Hohlprofils 1, so lässt sich die Gesamtlänge der erfindungsgemäßen Halterung durch modulares Zusammenfügen zweier oder mehrerer Hohlprofile 1 nahezu beliebig verlängern.

**Bezugszeichenliste**

| | |
|---|---|
| 1 | Hohlprofil |
| 2a | untere Seitenwand |
| 2b | obere Seitenwand |
| 2c | kurze Seitenwand |
| 2d | Versteifungsrippe |
| 3 | Stützrippe |
| 4 | erster Kanal |
| 4a | erster Schlitz |
| 4b | zweiter Schlitz |
| 4c | C-förmiger Abschnitt |
| 4d | Halteabschnitt |
| 5 | Verbindungsstecker |
| 5a | Anschlusselement |
| 5b | Vorsprung |
| 5c | Sockelelement |
| 6 | zweiter Kanal |
| 7a | dritter Kanal |
| 7b | vierter Kanal |
| 8a | erster Steckverbinder |
| 8b | keilförmiger zweiter Steckverbinder |
| 9 | Ladekabel |
| 10 | Elektronikgerät |

## Patentansprüche

1. Halterung für elektronische Geräte (10) mit einem Hohlprofil (1), das einen in einer Längsrichtung der Halterung verlaufenden ersten Kanal (4) zur Aufnahme wenigstens eines Geräte-Verbindungssteckers (5) aufweist, **dadurch gekennzeichnet, dass** der erste Kanal (4) die Grundform eines Zylinders hat, dessen Innendurchmesser im wesentlichen dem Außendurchmesser eines zylindrischen Sockelelements (5c) des Verbindungssteckers (5) entspricht und um dessen Mittelachse der Verbindungsstecker (5) schwenkbar ist, wobei der erste Kanal (4) dem Verbindungsstecker (5) eine lineare Führung in der Längsrichtung gibt, so dass der Verbindungsstecker (5) in der Längsrichtung verschiebbar und senkrecht zu der Längsrichtung über einen vorgegebenen Winkelbereich schwenkbar ist.

2. Halterung nach Anspruch 1, wobei der erste Kanal (4) einen ersten Schlitz (4a) und/oder einen zweiten Schlitz (4b) aufweist, die jeweils in der Längsrichtung verlaufen.

3. Halterung nach Anspruch 2, wobei
der erste Kanal (4) in einem senkrecht zu der Längsrichtung verlaufenden Querschnitt einen im wesentlichen C-förmigen Abschnitt (4c) und einen diesem C-förmigen Abschnitt (4c) entgegengesetzten Halteabschnitt (4d) aufweist und
der erste Schlitz (4a) und/oder der zweite Schlitz (4b) jeweils zwischen dem C-förmigen Abschnitt (4c) und dem Halteabschnitt (4d) angeordnet sind.

4. Halterung nach Anspruch 2 oder 3, wobei
der Verbindungsstecker (5) einen sich von dem Sockelelement (5c) radial nach außen erstreckenden Vorsprung (5b) aufweist, der in den zweiten Schlitz (4b) ragt und das Schwenken des Verbindungssteckers (5) auf den vorgegebenen Winkelbereich begrenzt, und
der Vorsprung (5b) und das Sockelelement (5c) vorzugsweise innen hohl und zu Durchführung eines Elektrokabels (9) ausgelegt sind.

5. Halterung nach einem der Ansprüche 2 bis 4, wobei der Verbindungsstecker (5) ein aus dem Sockelelement (5c) radial nach außen ragendes Anschlusselement (5a) zur elektrischen Verbindung mit dem elektronischen Gerät (10) aufweist, wobei das Anschlusselement (5a) durch den ersten Schlitz (4a) hindurchragt.

6. Halterung nach einem der vorstehenden Ansprüche, wobei das Hohlprofil (1) eine quer zu der Längsrichtung nach oben ragende Stützrippe (3) aufweist, gegen die sich ein an den Verbindungsstecker (5) angestecktes elektronisches Gerät (10) in im wesentlichen aufrechter, gegenüber der Vertikalen um ca. 3° bis 25°, vorzugsweise um ca. 5° bis 15°, nach hinten geneigter Position anlehnen lässt.

7. Halterung nach Anspruch 6, wobei
das Hohlprofil (1) eine Grundstruktur mit zwei in spitzem Winkel aufeinander zulaufenden Seitenwänden (2a, 2b) aufweist, die in einem Querschnitt senkrecht zu der Längsrichtung im wesentlichen die zwei langen Schenkel eines spitzwinkligen Dreiecks bilden,
die Stützrippe (3) vorzugsweise rechtwinklig von einer (2b) der Seitenwände nach oben ragt, und
die zwei Seitenwände (2a, 2b) durch eine Versteifungsrippe (2d) verbunden sind, die einen in der Längsrichtung der Halterung verlaufenden zweiten Kanal (6) von einem in der Längsrichtung der Halterung verlaufenden vierten Kanal (7b) trennt.

8. Halterung nach einem der vorstehenden Ansprüche, wobei das Hohlprofil (1) einen in der Längsrichtung der Halterung verlaufenden zweiten Kanal (6) zum Durchführen eines an den Verbindungsstecker (5) angeschlossenen Elektrokabels (9) aufweist.

9. Halterung nach einem der vorstehenden Ansprüche, wobei das Hohlprofil (1) einen in der Längsrichtung der Halterung verlaufenden dritten Kanal (7a) und/oder einen in der Längsrichtung der Halterung verlaufenden vierten Kanal (7b) aufweist, die jeweils zur Aufnahme von entsprechend geformten Steckverbindern (8a, 8b) ausgelegt sind, mittels denen sich ein weiteres Hohlprofil (1) zur Verlängerung der Halterung in der Längsrichtung anstecken lässt.

10. Halterung nach einem der vorstehenden Ansprüche, wobei der erste Kanal (4), der zweite Kanal (6), der dritte Kanal (7a) und/oder der vierte Kanal (7b) in der Längsrichtung an wenigstens einem Ende offen sind.

11. Halterung nach einem der vorstehenden Ansprüche, wobei das Hohlprofil (1) einstückig aus Metall und/oder Kunststoff hergestellt ist.

## Claims

1. A support for electronic appliances (10) comprising a hollow profile (1) having a first channel (4) extending in a longitudinal direction of the support and adapted to receive at least one appliance connection plug (5), **characterised in that** the first channel (4) has the basic shape of a cylinder whose inner diameter substantially corresponds to the outer diameter of a cylindrical base element (5c) of the connection plug (5), wherein the connection plug (5) is pivotable about the middle axis of the cylinder, and wherein the first channel (4) provides the connection plug (5) with a linear guidance in the longitudinal direction so that the connection plug (5) is slidable in the longitudinal direction and pivotable within a predetermined angular range in a direction perpendicular to the longitudinal direction.

2. The support of claim 1, wherein the first channel (4) has a first slit (4a) and/or a second slit (4b) each extending in the longitudinal direction.

3. The support of claim 2, wherein
the first channel (4) comprises, in a cross-section perpendicular to the longitudinal direction, a substantially C-shaped portion (4c) and a holding portion (4d) which is located opposite to this C-shaped portion (4c), and
the first slit (4a) and/or the second slit (4b) are each positioned between the C-shaped portion (4c) and the holding portion (4d).

4. The support of claim 2 or 3, wherein
the connection plug (5) comprises a protrusion (5b) extending radially outwards from the base element (5c), wherein the protrusion protrudes into the second slit (4b) and confines the pivoting of the connection plug (5) to the predetermined angular range, and
the protrusion (5b) and the base element (5c) are preferably hollow inside and suitable for conducting an electronic cable (9).

5. The support of any of claims 2 to 4, wherein the connection plug (5) comprises a connection element (5a) protruding radially outwards from the base element (5c) for electrical connection with the electronic appliance (10), wherein the connection element (5a) protrudes through the first slit (4a).

6. The support of any preceding claim, wherein the hollow profile (1) comprises a supporting rib (3) extending upwards in a direction transversal to the longitudinal direction, wherein an electronic appliance (10) connected to the connection plug (5) can be reclined against the supporting rib in a substantially upright position which is inclined backwards with respect to the vertical axis by about 3° to 25°, preferably by about 5° to 15°.

7. The support of claim 6, wherein
the hollow profile (1) has a basic structure with two sidewalls (2a, 2b) meeting each other at an acute angle, wherein the two sidewalls substantially form the two long legs of an acute-angled triangle in a cross-section perpendicular to the longitudinal direction,
the supporting rib (3) preferably protrudes at a right angle from one (2b) of the sidewalls upwards, and
the two sidewalls (2a, 2b) are connected by a reinforcing rib (2d) which separates a second channel (6) extending in the longitudinal direction of the support from a fourth channel (7b) extending in the longitudinal direction of the support.

8. The support of any preceding claim, wherein the hollow profile (1) comprises a second channel (6) extending in the longitudinal direction of the support for guiding an electronic cable (9) connected to the connection plug (5).

9. The support of any preceding claim, wherein the hollow profile (1) comprises a third channel (7a) extending in the longitudinal direction of the support and/or a fourth channel (7b) extending in the longitudinal direction of the support, wherein the third and fourth channels are each adapted to receive appropriately formed plug connectors (8a, 8b) by which a further hollow profile (1) can be plugged for prolonging the support in the longitudinal direction.

10. The support of any preceding claim, wherein the first channel (4), the second channel (6), the third channel (7a) and/or the fourth channel (7b) are open in the longitudinal direction at at least one of their end faces.

11. The support of any preceding claim, wherein the hollow profile (1) is made integrally of metal and/or plastics.

## Revendications

1. Support pour des appareils électroniques (10) comportant un profil creux (1) ayant un premier canal (4) s'étendant dans une direction longitudinale du support et adapté pour recevoir au moins une fiche de branchement d'appareil (5) **caractérisé en ce que** le premier canal (4) présente la forme de base d'un cylindre dont le diamètre intérieur correspond sensiblement au diamètre extérieur de l'élément de base cylindrique (5c) de la fiche de branchement (5), dans lequel la fiche de branchement (5) peut pivoter autour de l'axe central du cylindre, et dans lequel le premier canal (4) fournit un guide linéaire à la fiche de branchement (5) dans la direction longitudinale de sorte que la fiche de branchement (5) peut coulisser dans la direction longitudinale et peut pivoter dans une plage angulaire prédéterminée dans une direction perpendiculaire à la direction longitudinale.

2. Support selon la revendication 1, dans lequel le premier canal (4) présente une première fente (4a) et/ou une seconde fente (4b) chacune s'étendant dans la direction longitudinale.

3. Support selon la revendication 2, dans lequel
le premier canal (4) comporte, dans une coupe transversale perpendiculaire à la direction longitudinale, une partie sensiblement en forme de C (4c) et une partie de maintien (4d) qui est positionnée à l'opposé de cette partie en forme de C (4c), et
chacune de la première fente (4a) et/ou de la seconde fente (4b) est positionnée entre la partie en forme de C (4c) et la partie de maintien (4d).

4. Support selon la revendication 2 ou 3, dans lequel
la fiche de branchement (5) comporte une saillie (5b) s'étendant radialement vers l'extérieur depuis l'élément de base (5c), dans lequel la saillie fait saillie dans la seconde fente (4b) et limite le pivotement de la fiche de branchement (5) dans la plage angulaire prédéterminée, et
la saillie (5b) et l'élément de base (5c) sont de manière préférée creux à l'intérieur et adaptés pour réaliser un câble électronique (9).

5. Support selon l'une quelconque des revendications 2 à 4, dans lequel la fiche de branchement (5) comporte un élément de connexion (5a) faisant saillie radialement vers l'extérieur depuis l'élément de base (5c) en vue d'une connexion électrique avec l'appareil électronique (10), dans lequel l'élément de connexion (5a) fait saillie à travers la première fente (4a).

6. Support selon l'une quelconque des revendications précédentes, dans lequel le profil creux (1) comporte une nervure de support (3) qui s'étend vers le haut dans une direction transversale à la direction longitudinale, dans lequel un appareil électronique (10) relié à la fiche de branchement (5) peut être basculé contre la nervure de support dans une position sensiblement verticale qui est inclinée vers l'arrière par rapport à l'axe vertical d'environ 3° à 25°, de manière préférée d'environ 5° à 15°.

7. Support selon la revendication 6, dans lequel
le profil creux (1) présente une structure de base ayant deux parois latérales (2a, 2b) qui se rejoignent mutuellement au niveau d'un angle aigu, dans lequel les deux parois latérales forment sensiblement les deux longs bras d'un triangle formant un angle aigu dans une coupe transversale perpendiculaire à la direction longitudinale,
la nervure de support (3) fait saillie de manière préférée selon un angle droit depuis l'une (2b) des parois latérales vers le haut, et
les deux parois latérales (2a, 2b) sont reliées par une nervure de renfort (2d) qui sépare un second canal (6) qui s'étend dans la direction longitudinale du support d'un quatrième canal (7b) qui s'étend dans la direction longitudinale du support.

8. Support selon l'une quelconque des revendications précédentes, dans lequel le profil creux (1) comporte un second canal (6) qui s'étend dans la direction longitudinale du support pour guider un câble électronique (9) relié à la fiche de branchement (5).

9. Support selon l'une quelconque des revendications précédentes, dans lequel le profil creux (1) comporte un troisième canal (7a) qui s'étend dans la direction longitudinale du support et/ou un quatrième canal (7b) qui s'étend dans la direction longitudinale du support, dans lequel chacun des troisième et quatrième canaux sont adaptés pour recevoir de manière appropriée des connecteurs enfichables formés (8a, 8b) par l'intermédiaire desquels un profil creux supplémentaire (1) peut être enfiché pour prolonger le support dans la direction longitudinale.

10. Support selon l'une quelconque des revendications précédentes, dans lequel le premier canal (4), le second canal (6), le troisième canal (7a) et/ou le quatrième canal (7b) sont ouverts dans la direction longitudinale au niveau au moins de l'une de leurs faces d'extrémité.

11. Support selon l'une quelconque des revendications précédentes, dans lequel le profil creux (1) est constitué intégralement de métal et/ou de matière plastique.
